# EUROPÄISCHE PATENTANMELDUNG

(11) **EP 2 072 022 A1**
(43) Veröffentlichungstag der Anmeldung: **24.06.2009**
(21) Anmeldenummer: 07024515.4
(22) Anmeldetag: 18.12.2007
(51) Int. Cl.: A61C 15/00, A61C 19/06

(54) **Vorrichtung zum Entfernen von Flüssigkeits- und/oder Gelresten auf Zahnoberflächen**

(71) Anmelder: Ernst Mühlbauer GmbH & Co.KG, 25870 Norderfriedrichskoog (DE)
(72) Erfinder: Reuss, Steffen, 20251 Hamburg (DE); Meyer-Lückel, Hendrik, 10437 Berlin (DE); Paris, Sebastian, 16816 Neuruppin (DE); Effenberger, Susanne, 20251 Hamburg (DE)
(74) Vertreter: Niebuhr, Heinrich

(57) **Zusammenfassung**

Die Vorrichtung zum Entfernen von Flüssigkeits- und/oder Gelresten auf Zahnoberflächen, die nach der Infiltration approximaler Schmelzläsionen mit der Flüssigkeit und/oder dem Gel auf den Zähnen verbleiben und entfernt werden müssen, zeichnet sich dadurch aus, dass sie eine zumindest teilweise transparente Kunststofffolie (14) und ein bügelförmiges Element (16) mit einem Steg (16) und zwei sich von demselben erstreckenden seitlichen Armen (18), die bogen- oder U-förmig angeordnet sind, zum Aufspannen der Folie (14) aufweist, und dass die Folie mit Abstreifern versehen ist.

## Beschreibung

Die Erfindung betrifft eine Vorrichtung zum Entfernen von Flüssigkeits- und/oder Gelresten auf Zahnoberflächen, die nach der Infiltration approximaler Schmelzläsionen mit der Flüssigkeit und/oder dem Gel auf den Zähnen verbleiben und entfernt werden müssen.

Karies zeichnet sich durch fortschreitende Demineralisierung des Zahnschmelzes durch Stoffwechselprodukte von Bakterien aus, wodurch zunächst kleinere Läsionen ("white spots") entstehen. Unbehandelt entstehen schließlich zur Zerstörung des Zahns führende Kavitäten. Selbst frühzeitig erkannte Läsionen sind selten zu remineralisieren, üblicherweise werden diese mittels klassischer Füllungstherapie behandelt, bei der auch gesunde Zahnsubstanz entfernt werden muss. Besonders nachteilig ist die Füllungstherapie bei approximal, d.h. an der dem Nachbarzahn zugewandten Seite des Zahns, vorliegender Karies, da, um einen Zugang zu schaffen, in gesteigertem Maß gesunde Zahnsubstanz entfernt werden muss. Wegen der schlechten Zugänglichkeit auch für Zahnbürsten kommt approximale Karies aber wesentlich häufiger vor als an Glattflächen (Außen- (vestibulär) und Innenseiten (lingual/palatinal) der Zähne).

Das Entfernen gesunder Zahnsubstanz wird durch das Verfahren der Infiltration von Schmelzläsionen weitgehend verhindert, indem ein Infiltrant, eine Flüssigkeit mit hohem Penetrationskoeffizient, in die bestehende Läsion eingebracht und dort polymerisiert wird, nachdem, falls dies erforderlich ist, die wenig poröse Oberflächenschicht der Karies mit einem Ätzmittel (z.B. einem Säuregel) entfernt worden ist, um die Poren des beschädigten Bereichs zu öffnen. Die Läsion ist somit vor dem Zutritt von Bakterien und/oder deren Stoffwechselprodukten geschützt. Um den Infiltranten approximal anzuwenden, sind wegen des erschwerten Zugangs spezielle Applikationshilfen nötig.

Zu diesem Zweck sind Folien zur Verwendung als Hilfsmittel zum Auftragen von Substanzen auf approximale Zahnflächen bekannt. Zum Beispiel beschreibt die Deutsche Offenlegungsschrift DE 10216950 A1 das Auftragen eines Fluoridgels mittels einer flexiblen Folie. Um das Einführen der Folie in den Zahnzwischenraum zu erleichtern, kann diese längs des Folienrandes durch einen integrierten Faden verstärkt sein. Eine Verlängerung dieses Fadens soll ein Verschlucken der Folie verhindern.

Als besonders zweckmäßig hat sich erwiesen die gleichzeitig zum Patent angemeldete Vorrichtung zur Infiltration approximaler Schmelzläsionen von Zähnen mit einer Kunststofffolie, die einen Oberflächenbereich zum Aufnehmen einer der Behandlung dienenden Flüssigkeit oder eines Gels aufweist, die sich dadurch auszeichnet, dass sie eine zumindest teilweise transparente Kunststofffolie und ein bügelförmiges Element mit einem Steg und zwei sich von demselben erstreckenden seitlichen Armen, die bogen- oder U-förmig angeordnet sind, zum Aufspannen der Folie aufweist.

Ein Problem, das bei einer solchen Infiltration auftritt ist, dass mehr Flüssigkeit oder Gel auf den Zahn aufgetragen werden muss, als tatsächlich in die Läsion eindringt, um sicherzustellen, dass genügend Flüssigkeit oder Gel vorhanden ist und die entsprechenden Poren der Läsion richtig gefüllt werden. Die entsprechenden Reste müssen entfernt werden. Dabei muss einerseits sichergestellt werden, lässt die Reste vollständig entfernt werden. Andererseits muss vermieden werden, dass die Flüssigkeit oder das Gel mit dem benachbarten gesunden Zahn oder der Mundschleimhaut in Berührung kommt.

Die Aufgabe der Erfindung besteht in der Schaffung einer Vorrichtung, mit der sich die Flüssigkeits- und/oder Gelreste vollständig entfernen lassen, ohne dass benachbarte Zähne oder die Mundschleimhaut mit der Flüssigkeit oder dem Gel benetzt werden.

Die erfindungsgemäße Lösung besteht darin, dass die Vorrichtung eine zumindest teilweise transparente Kunststofffolie und ein bügelförmiges Element mit einem Steg und zwei sich von demselben erstreckenden seitlichen Armen, die bogen- oder U-förmig angeordnet sind, zum Aufspannen der Folie (14) aufweist, und dass die Folie mit Abstreifern versehen ist.

Es wird also einerseits eine Folie mit Abstreifern verwendet und nicht etwa ein saugfähiges Material wie ein Gewebe oder dergleichen, da sonst die Gefahr besteht, dass Flüssigkeit oder Gel aus der Läsion wieder auswandert und entfernt wird. Gewebe haben auch den Nachteil, dass sie nicht transparent sind und somit die Sicht behindern. Es wird durch die erfindungsgemäße Vorrichtung nur die überschüssige Flüssigkeit oder das überschüssige Gel abgestreift. Besonders zweckmäßig ist es dabei, dass die Kunststofffolie teilweise transparent ist, da so der Zahnarzt die Behandlung besser beobachten kann. Schließlich wird nicht nur einfach eine streifenförmige Folie verwendet, die der Zahnarzt mit beiden Händen halten müsste. Die Folie wird vielmehr durch das bügelförmige Element gehalten. Dadurch werden folgende Nachteile vermieden.

Verwendet man lediglich streifenförmigen Folien, so besteht das Problem, dass sie bedingt durch ihre Abmessungen und Beweglichkeit schwer zu handhaben sind. Die Handhabung wird weiterhin erschwert, da sich Polymer-Kunststofffolien statisch aufladen können und dann an den Händen bzw. Handschuhen des Anwenders haften. Die Beweglichkeit birgt auch die Gefahr, dass die zu entfernenden Substanzen in Berührung mit einem gesunden Zahn oder gar der Mundschleimhaut kommen. Weiterhin sind sie nur mit zwei Händen im Mundraum anzuwenden, sodass der Anwender keine Hand mehr frei hat, um ein weiteres Gerät (Dentalspiegel etc.) mit einzuführen. Weiterhin etwa bei hinteren Backenzähnen muss der Anwender mit den Fingern tief in den Mundraum eindringen, um die Folien im Zahnzwischenraum korrekt in Position zu bringen. Dies verengt den begrenzten Arbeitsraum sowie das Sichtfeld.

Die Folie wird durch das bügelförmige Element in ihrer Beweglichkeit eingeschränkt, sodass der Anwender diese leicht mit einer Hand im Mundraum anwenden kann. Bügelförmige Halterungen sind zwar im Dentalbereich etwa für Zahnseide oder Schleifbänder zur Reinigung approximaler Zahnflächen bekannt. Beispielhaft seien hier die US 2005/0271999 und die EP 1449495 A2 genannt. Diese müssen aber sehr stabil ausgebildet seien, da sie beim Reinigen der Zahnflächen oder Zahnzwischenräume großen Kräften widerstehen und daher entsprechend groß ausgebildet sein müssen. Diese Problematik tritt beim Entfernen von Flüssigkeits- und Gelresten bei der Infiltration approximaler Schmelzläsionen nicht auf, da dort nur eine dünne Folie in den durch einen Separierungskeil oder dergleichen leicht aufgeweiteten Zahnzwischenraum eingebracht werden muss, wobei keine Reibungskräfte auf die Folie ausgeübt werden. Daher würde man erwarten, dass der Fachmann diese bekannten bügelförmigen Halterungen nicht in Betracht ziehen würde, wenn er nach einer Lösung der Aufgabe sucht, sie sogar wegen der zusätzlichen Kosten und des zusätzlichen Raums, den sie einnehmen, für nachteilig halten würde. Es ist das Verdienst der Erfindung, dieses Vorurteil überwunden zu haben.

Das bügelförmige Element weist gegenüber der Folie eine erhöhte Stabilität auf, wodurch die Folie stabilisiert wird. Unkontrollierte Bewegungen, Verdrehen, Abknicken oder Verbiegen der Folie werden so verhindert. Das bügelförmige Element besteht bevorzugt aus einem thermoplastischen Kunststoff. Es ist bevorzugt ein Spritzgussteil. Es weist einen oberen Steg und zwei seitliche Arme auf. Steg und Arme sind bevorzugt einteilig ausgebildet. Steg und Arme sind bogen- oder U-förmig angeordnet. Bevorzugt kann sich die Spannweite des Bogens zu den Enden hin verjüngen. Das bügelförmige Element weist eine Größe auf, die es erlaubt, mindestens eine Folie aufzunehmen, die der approximalen Fläche eines menschlichen Zahnes entspricht. Es weist eine Größe auf, die es erlaubt, die Vorrichtung vollständig in den Mundraum einzuführen und in einem Zahnzwischenraum anzuwenden. Das bügelförmige Element hat eine Spannweite von 5 bis 35 mm, bevorzugt 10 bis 25 mm, besonders bevorzugt 15 bis 20 mm. Die seitlichen Arme haben dabei etwa eine Länge, die der Höhe einer Zahnkrone entspricht. Die seitlichen Arme sind bevorzugt etwas länger als die benachbarten Zahnkronen hoch sind. Der Steg hat eine Länge von 3 bis 25 mm, bevorzugt 4 bis 20 mm, besonders bevorzugt 5 bis 15 mm.

Das bügelförmige Element kann eine vorbestimmte Biegefestigkeit aufweisen. Insbesondere im Bereich des Steges weist es eine Biegefestigkeit auf, die es ermöglicht, dies Vorrichtung quer zur Bissfläche leicht zu biegen, um die eingespannte Kunststofffolie besser an eine gekrümmte approximale Zahnfläche anzupassen.

Alternativ kann hierzu das bügelförmige Element so gestaltet sein, dass die Folie quer zur Bissfläche von vorneherein in eine Bogenform gezwungen wird. Der Steg ist dann quer zur Bissfläche der Zähne bogenförmig ausgebildet. Die Arme erstrecken sich dann im Wesentlichen orthogonal zur Biegung des Stegs. Die Folie folgt im Wesentlichen dem Verlauf des Bogens und ist mit den Armen sowie dem Steg fest verbunden.

Eine weitere Alternative ist es, Kunststofffolien auszuwählen, die so dehnbar sind, dass sie sich leicht an die Zahnoberfläche anschmiegen.

Die Kunststofffolie ist fest mit dem bügelförmigen Element verbunden. Die Kunststofffolie kann in das bügelförmige Element eingeklemmt oder eingespannt werden. Vorzugsweise ist aber eine zerstörungsfreie Trennung nicht vorgesehen. Bevorzugt ist die Kunststofffolie an das bügelförmigen Element geschweißt oder geklebt.

Die Vorrichtung ist bevorzugt als Wegwerfteil ausgebildet und nur zur einmaligen Benutzung vorgesehen.

Die Kunststofffolie ist im Wesentlichen oder zumindest teilweise transparent, bevorzugt ist die gesamte Folie transparent. Dies ermöglicht allgemein ein verbessertes Sichtfeld, insbesondere ermöglicht dies gute Sicht auf das Behandlungsgebiet.

Die Kunststofffolie ist bevorzugt aus einem Kunststoff, der mit dem Kunststoff des bügelförmigen Elements leicht zu verschweißen ist. Die Kunststofffolie weist zweckmäßigerweise eine hohe Reißfestigkeit bei gleichzeitig geringer Dicke auf. Die Kunststofffolie weist insbesondere eine gute chemische Beständigkeit gegen die zu entfernenden Flüssigkeiten und Gele auf. Der Kunststoff ist bevorzugt ein Polyolefin, wie z.B. Polyethylen (HDPE, LDPE), Polypropylen, Polystyren, Polyvinylchlorid oder Polyacrylat, ein Polyamid, ein Polyester oder Polycarbonat. Unter Kunststoffen sind hier auch solche auf Grundlage natürlicher Polymere wie z.B. Zelluloid zu verstehen. Besonders bevorzugt ist Polyethylenterephthalat (PET), z.B Hostaphan^{®}.

Die Kunststofffolie weist insbesondere im nicht gespannten Zustand eine gewisse Eigenstabilität auf, sodass z.B. ein Stauchen verhindert wird. Weiterhin muss die Kunststofffolie eine Dicke aufweisen, die das Einführen in den Zahnzwischenraum ermöglicht. Bevorzugt hat die Kunststofffolie zusammen mit den Abstreifern eine Dicke, die das Einführen in den Zahnzwischenraum ermöglicht. Die Kunststofffolie hat eine geringere Stärke als etwa 1 mm, bevorzugt eine geringere Stärke als etwa 0,5 mm, weiter bevorzugt eine geringere Stärke als etwa 0,3 mm, weiter bevorzugt eine geringere Stärke als etwa 0,1 mm, besonders bevorzugt eine geringere Stärke als etwa 0,05 mm.

Die Höhe und Länge der Kunststofffolie ist dem bügelförmigen Element angepasst. Die Dimensionen gewährleisten, dass eine Berührung der Flüssigkeit oder des Gels mit dem Nachbarzahn weitestgehend vermieden wird. Dieser Kontaminationsschutz wird weiter verbessert, wenn die Folie dreiseitig, dem Bügelverlauf folgend, abdichtend mit dem bügelförmigen Element verbunden ist.

Zwischen den Abstreifern der Folie befinden sich Vertiefungen, wobei rillenförmige Vertiefungen bevorzugt sind, die bevorzugt quer zur Abstreifrichtung verlaufen. Es können jedoch auch andere Geometrien verwendet werden. Sie dienen zum Abstreifen überschüssigen Infiltrationsmaterials.

Bevorzugt werden die Vertiefungen durch den Verbund zweier Folien gebildet, wobei eine der Folien eine Ausnehmung oder eine Vielzahl von Ausnehmungen enthält, die nach Verbund der Folien die Vertiefungen bildet bzw. bilden. Die Abstreifer werden durch das verbliebene Folienmaterial gebildet.

Die Abstreifer können auch von anderweitig mit der Folie verbundenen Lamellen gebildet werden. Die Lamellen können dabei beispielsweise thermisch befestigt oder mittels eines Klebers aufgebracht werden. Solcherart befestigte Lamellen bestehen vorzugsweise aus elastischen Materialien beispielsweise Silikon oder Gummi.

Die Abstreifer sind bevorzugt schräg angeordnet, sodass die Substanz während des Abstreifens der Zahnoberfläche besser abfließen kann. Die Abstreifer können auch nach beiden Seiten abgewinkelt bzw. bogenförmig sein, sodass von der Zahnoberfläche aufzunehmende überschüssige Flüssigkeit gut abfließen kann.

Es können zusätzlich Überschussrillen längs zur Abstreifrichtung verlaufen, und/oder die Vertiefungen zwischen den Abstreifern sind zumindest nach einem Ende des Folienstreifens offen. Dies verhindert, dass eine Sogwirkung in den Vertiefungen entsteht und dadurch Flüssigkeit oder Gel aus der infiltrierten Läsion wieder herausgesaugt wird. Aus diesem Grund sind stark saugfähige Reinigungselemente beispielsweise aus Geweben oder Baumwollkissen wenig geeignet.

Das bügelförmige Element kann Einrichtungen aufweisen, um einen Haltegriff zu befestigen. Das Einführen und Platzieren der Applikationshilfe mittels eines Haltegriffs hat den Vorteil, dass der Anwender nicht mit den Fingern in der Mundhöhle hantieren muss. Dies erlaubt zum einen eine weiter verbesserte Sicht auf das Behandlungsareal und weiterhin eine besser kontrollierte Anwendung der erfindungsgemäßen Vorrichtung. Der Haltegriff ist bevorzugt oberhalb und/oder seitlich am Steg des bügelförmigen Elements oder an einen der Arme angebracht.

Die erfindungsgemäße Vorrichtung, die aus dem bügelförmigen Element und der Folie mit den Abstreifern besteht, bildet zweckmäßigerweise mit der erwähnten Vorrichtung zur Infiltration eine Gesamtvorrichtung in Form eines Behandlungssatzes, der zusätzlich einen oder mehrere Separierungskeile verschiedener Größe zum Aufweiten des Zahnzwischenraums, ein Ätzmittel, ein Trocknungsmittel und/oder eine Applikationshilfe für das Ätzmittel sowie die Infiltrationsflüssigkeit oder das Infiltrationsgel aufweist.

Grundsätzlich geeignete Separationskeile des Satzes sind beispielsweise im United States Patent US 6,482,007 B2 beschrieben. Das Trocknungsmittel für die Läsion ist vorzugsweise ein leicht flüchtiges, toxikologisch unbedenkliches Lösungsmittel, insbesondere enthält dieses Ethanol. Weiterhin kann der Satz Pinsel und/oder Spritzen zum Auftragen der verschiedenen Materialien auf die Applikationshilfen oder auch auf den Zahn direkt enthalten.

Die Separierungskeile haben dabei zweckmäßigerweise dreieckigen Querschnitt, wobei es sich als besonders vorteilhaft erwiesen hat, wenn eine der drei Spitzen des dreieckigen Querschnitts abgeflacht ist, so dass der Querschnitt trapezförmig, ist da dies das Einbringen der Folie erleichtert, wenn die abgeflachte Spitze vom Zahnfleisch weggerichtet ist.

Die erfindungsgemäße Vorrichtung lässt sich natürlich genausogut zum Entfernen eines flüssigen oder gelartigen Ätzmittels verwenden.

Die Erfindung wird im Folgenden anhand von vorteilhaften Ausführungsformen unter Bezugnahme auf die beigefügten Zeichnungen beispielsweise beschrieben. Es zeigen:
- Fig. 1: eine erfindungsgemäße Vorrichtung in perspektivischer Darstellung;
- Fig. 2: die Ausführungsform der Fig. 1 mit einem daran angebrachtem Haltegriff;
- Fig. 3: eine Vorrichtung zur Infiltration approximaler Schmelzläsionen, die vorteilhafterweise zusammen mit der erfindungsgemäßen Vorrichtung verwendet werden kann.

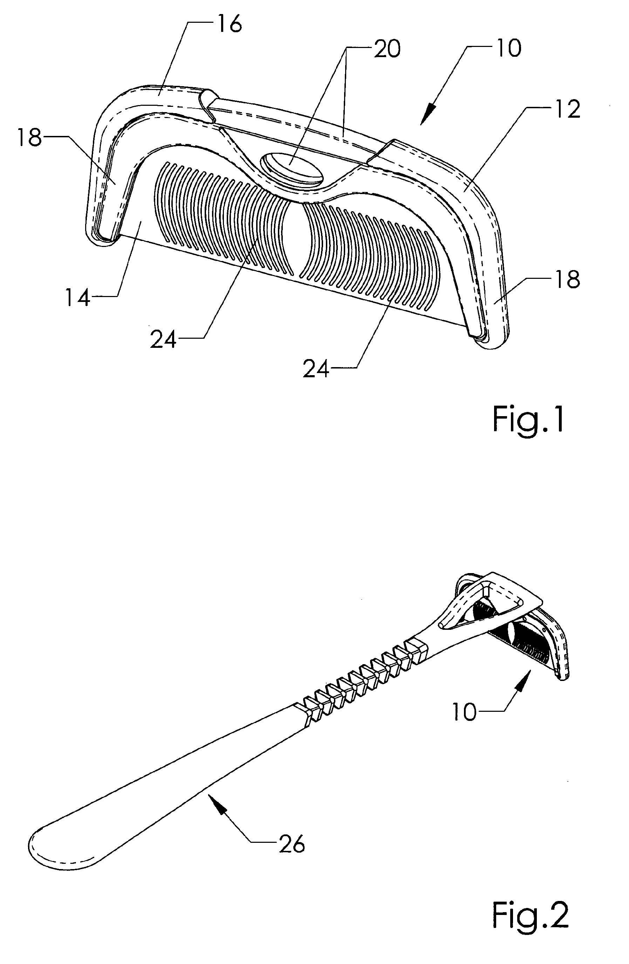

In Fig. 1 ist eine Ausführungsform der erfindungsgemäßen Vorrichtung 10 gezeigt, die ein bügelförmiges Element 12 aufweist, das im Wesentlichen U-förmig ist und einen Steg 16 sowie zwei Arme 18 aufweist. Das bügelförmige Element 12 ist vorteilhafterweise aus Kunststoff, insbesondere ein Spritzgussteil. Zwischen dem Steg 16 und den Armen 18 ist eine Kunststofffolie 14 befestigt, deren untere Kante bis an die freien Enden der Arme 18 reicht. Die Kunststofffolie weist Lamellen 24 auf, die zum Abstreifen der überflüssigen Flüssigkeit beziehungsweise des überflüssigen Gels dienen. Der Steg 16 ist mit Ausnehmungen 20 versehen, die zur Befestigung eines Haltegriffs 26 dienen, der in Fig. 2 gezeigt ist. Dieser Haltegriff kann auch seitlich an einem Arm 18 angebracht sein.

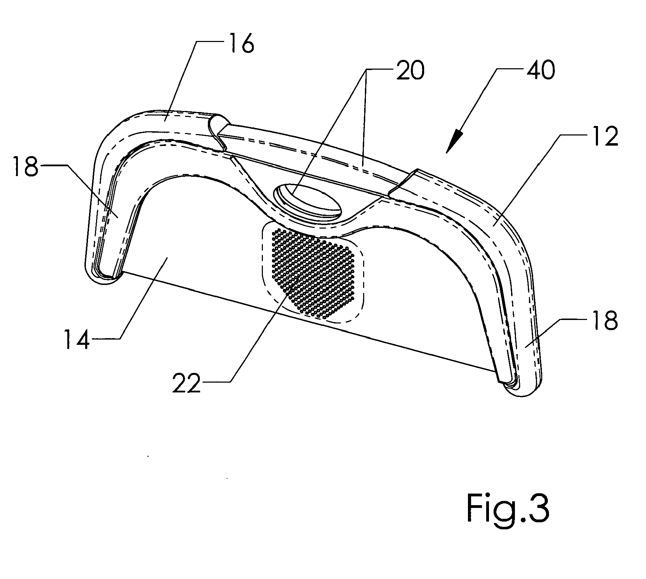

In Fig. 3 ist eine Vorrichtung 30 für die Infiltration approximaler Schmelzläsionen von Zähnen gezeigt, die vorteilhafterweise mit der erfindungsgemäßen Vorrichtung verwendet werden kann und ähnlich wie dieselbe aufgebaut ist. Sie weist ein bügelförmiges Element 12 auf, das im Wesentlichen U-förmig ist und einen Steg 16 sowie zwei Arme 18 aufweist. Das bügelförmige Element 12 ist vorteilhafterweise aus Kunststoff, insbesondere ein Spritzgussteil. Zwischen dem Steg 16 und den Armen 18 ist eine Kunststofffolie 14 befestigt, deren untere Kante bis an die freien Enden der Arme 18 reicht. Die Kunststofffolie weist im Bereich 22 Vertiefungen auf, auf die bezw. in die ein Infiltrationsmittel auf- bezw. eingebracht werden kann. Der Steg 16 ist mit Ausnehmungen 20 versehen, die zur Befestigung eines Haltegriffs 26 dienen, der in Fig. 2 gezeigt ist. Dieser Haltegriff kann auch seitlich an einem Arm 18 angebracht sein und dabei vorteilhafterweise mit einem scharnierartigen Verbindungsbereich am Arm 18 befestigt sein, damit der Haltegriff 26 nach dem Anbringen der Vorrichtung 10 im Zahnzwischenraum umgeklappt werden kann. Andererseits kann die Befestigung eine Sollbruchstelle sein, so dass der Haltegriff 26 nach Anbringen der Vorrichtung 10 aus dem Mundraum entfernt werden kann.

### Liste der Bezugsziffern

- 10: Applikationshilfe
- 12: bügelförmiges Element
- 14: Kunststofffolie
- 16: Steg
- 18: Arm
- 20: Einrichtung zur Befestigung eines Handgriffs
- 22: Applikationsfeld/ Vertiefungen
- 24: Reinigungsbereich/ Lamellen
- 26: Handgriff
- 28: Öffnung
- 30: Kanal
- 32: Spritze
- 34: Folienbeutel
- 40: Vorrichtung für die Infiltration

## Patentansprüche

1. Vorrichtung zum Entfernen von Flüssigkeits- und/oder Gelresten auf Zahnoberflächen, die nach der Infiltration approximaler Schmelzläsionen mit der Flüssigkeit und/oder dem Gel auf den Zähnen verbleiben und entfernt werden müssen, **dadurch gekennzeichnet, dass** sie eine zumindest teilweise transparente Kunststofffolie (14) und ein bügelförmiges Element (16) mit einem Steg (16) und zwei sich von demselben erstreckenden seitlichen Armen (18) , die bogen- oder U-förmig angeordnet sind, zum Aufspannen der Folie (14) aufweist, und dass die Folie mit Abstreifern versehen ist.

2. Vorrichtung nach Anspruch 1, **dadurch gekennzeichnet, dass** die Abstreifer durch rillenförmige Vertiefungen gebildet sind.

3. Vorrichtung nach Anspruch 1, **dadurch gekennzeichnet, dass** die Abstreifer durch aufgeklebte Lamellen gebildet sind.

4. Vorrichtung nach einem der Ansprüche 1 bis 3, **dadurch gekennzeichnet, dass** die dem Entfernen der Flüssigkeit- und/oder Gelreste dienenden Bereiche (24) mit zu einem Arm (18) gerichteten rillenförmigen Vertiefungen versehen sind.

5. Vorrichtung nach einem der Ansprüche 1 bis 4, **dadurch gekennzeichnet, dass** das bügelförmige Element (12) aus Kunststoff, insbesondere aus thermoplastischem Kohlenstoff ist.

6. Vorrichtung nach einem der Ansprüche 1 bis 5, **dadurch gekennzeichnet, dass** das bügelförmige Element (12) ein Spritzgussteil ist.

7. Vorrichtung nach einem der Ansprüche 1 bis 6, **dadurch gekennzeichnet, dass** der Steg (16) bogenförmig ausgebildet ist und sich die Arme (18) im Wesentlichen orthogonal zur Krümmung des Stegs (16) erstrecken.

8. Vorrichtung nach einem der Ansprüche 1 bis 7, **dadurch gekennzeichnet, dass** die Folie (14) dehnbar ist.

9. Vorrichtung nach einem der Ansprüche 1 bis 8, **dadurch gekennzeichnet, dass** die Folie (14) in das bügelförmige Element (12) einklemmbar oder einspannbar ist.

10. Vorrichtung nach einem der Ansprüche 1 bis 8, **dadurch gekennzeichnet, dass** die Folie (14) mit den bügelförmigen Element (12) durch Schweißen oder Kleben verbunden ist.

11. Vorrichtung nach einem der Ansprüche 1 bis 10, **dadurch gekennzeichnet** er, dass die Folie (14) dreiseitig flüssigkeitsdicht mit den bügelförmigen Element (12) verbunden ist.

12. Vorrichtung nach einem der Ansprüche 1 bis 11, **dadurch gekennzeichnet, dass** sie einen Haltegriff (26) aufweist.

13. Vorrichtung nach Anspruch 12, **dadurch gekennzeichnet, dass** der Haltegriff (26) seitlich an einem Arm angebracht ist.

14. Vorrichtung nach einem der Ansprüche 1 bis 13, **dadurch gekennzeichnet, dass** sich die Folie (14) bis zu den freien Enden der Arme (18) erstreckt.

15. Vorrichtung nach einem der Ansprüche 1 bis 14, **dadurch gekennzeichnet, dass** die Lamellen aus elastischem Material sind

16. Vorrichtung nach einem der Ansprüche 1 bis 15, **dadurch gekennzeichnet, dass** sie zusätzlich eine oder mehrere Separierungskeile verschiedener Größe zum Aufweiten des Zahnzwischenraums, ein Ätzmittel, ein Trocknungsmittel und/oder eine Applikationshilfe für das Ätzmittel sowie die Infiltrationsflüssigkeit oder das Infiltrationsgel und eine Applikationshilfe für die Flüssigkeit oder das Gel aufweist.
